# EUROPEAN PATENT APPLICATION

(11) **EP 4 598 257 A1**
(43) Date of publication of application: **06.08.2025**
(21) Application number: 24738689.9
(22) Date of filing: 03.01.2024
(51) Int. Cl.: H04W 76/18, H04W 76/19, H04W 72/21, H04W 72/23, H04W 24/08, H04W 24/10, H04W 84/04

(54) **METHOD AND DEVICE FOR FAILURE HANDLING OF NETWORK CONTROL REPEATER IN MOBILE COMMUNICATION SYSTEM**

(30) Priority: 03.01.2023 KR 20230000752
(71) Applicant: Samsung Electronics Co., Ltd., Suwon-si, Gyeonggi-do 16677 (KR)
(72) Inventor: HWANG, June, Suwon-si, Gyeonggi-do 16677 (KR); SEDIN, Jonas, Suwon-si, Gyeonggi-do 16677 (KR); TESANOVIC, Milos, Suwon-si, Gyeonggi-do 16677 (KR); KANG, Hyunjeong, Suwon-si, Gyeonggi-do 16677 (KR)
(74) Representative: Gulde & Partner
(86) International application number: PCT/KR2024/000079
(87) International publication number: WO 2024/147618

(57) **Abstract**

The present disclosure relates to a 5G or 6G communication system for supporting higher data transmission rates. In particular, the present disclosure proposes a method for processing control signals by separating the signals into a terminal direction and a repeater direction.

## Description

### [Technical Field]

The disclosure relates to the operation of a repeater in a mobile communication system. More particularly, the disclosure relates to a technique for handling failure of information between repeater configured terminals.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advancement of mobile communication systems as described above, it has become possible to provide various services, and methods for effectively providing these services are required.

### [Disclosure]

### [Technical Problem]

The disclosure relates to a method for resolving a failure of repeater configuration information.

### [Technical Solution]

In the disclosure to solve the above problem, a method performed by a network-controlled repeater mobile termination (NCR-MT) in a communication system may include: receiving a radio resource control (RRC) message including a configuration for the NCR-MT and a configuration for an NCR-FWD (forwarding) from a base station; performing a compliance check on the configuration for the NCR-MT included in the RRC message with a compliance check on the configuration for the NCR-FWD being disregarded; and transmitting an RRC complete message to the base station in case that the compliance check on the configuration for the NCR-MT is successful.

Additionally, in the disclosure to solve the above problem, a method performed by a base station in a communication system may include: transmitting a radio resource control (RRC) message including a configuration for a network-controlled repeater mobile termination (NCR-MT) and a configuration for an NCR-FWD (forwarding) to the NCR-MT; and receiving an RRC complete message from the NCR-MT, wherein the RRC complete message may be received in case that a compliance check performed by the NCR-MT on the configuration for the NCR-MT is successful, and a compliance check on the configuration for the NCR-FWD is disregarded.

Additionally, in the disclosure to solve the above problem, a **network-controlled repeater mobile termination (NCR-MT)** in a communication system may include: a transceiver; and a controller connected to the transceiver, wherein the controller may be configured to: receive a radio resource control (RRC) message including a configuration for the NCR-MT and a configuration for an NCR-FWD (forwarding) from a base station; perform a compliance check on the configuration for the NCR-MT included in the RRC message with a compliance check on the configuration for the NCR-FWD being disregarded; and transmit an RRC complete message to the base station in case that the compliance check on the configuration for the NCR-MT is successful.

Further, in the disclosure to solve the above problem, a base station in a communication system may include: a transceiver; and a controller connected to the transceiver, wherein the controller may be configured to: transmit a radio resource control (RRC) message including a configuration for a network-controlled repeater mobile termination (NCR-MT) and a configuration for an NCR-FWD (forwarding) to the NCR-MT; and receive an RRC complete message from the NCR-MT, wherein the RRC complete message may be received in case that a compliance check performed by the NCR-MT on the configuration for the NCR-MT is successful, and whether a compliance check on the configuration for the NCR-FWD is disregarded.

### [Advantageous Effects]

According to embodiments of the disclosure, the repeater may respond to a failure of configuration information without unnecessary interruption time.

### [Description of Drawings]

FIG. 1 is a diagram illustrating the architecture of a typical LTE system.
FIG. 2 is a diagram showing the structure of radio protocols in the typical LTE system.
FIG. 3 is a diagram illustrating the architecture of a next-generation mobile communication system according to an embodiment of the disclosure.
FIG. 4 is a diagram illustrating the structure of radio protocols in the next-generation mobile communication system according to an embodiment of the disclosure.
FIG. 5 is a block diagram illustrating the internal structure of a UE according to an embodiment of the disclosure.
FIG. 6A is a block diagram illustrating the structure of an NR base station according to an embodiment of the disclosure.
FIG. 6B is a diagram illustrating the functional structure and related links of a network controlled repeater (NCR).
FIG. 7 is a diagram illustrating operations performed based on a legacy RRCReconfiguration message compliance check.
FIG. 8 is a diagram illustrating a method for performing a compliance check on the RRCReconfiguration according to an embodiment of the disclosure.
FIG. 9 is a diagram illustrating a method for performing a compliance check on the RRCReconfiguration according to an embodiment of the disclosure.
FIG. 10 illustrates a method for notifying a FWD failure via MAC CE or physical layer control signal according to an embodiment of the disclosure.
FIG. 11 is a diagram illustrating operations performed when a failure occurs in a situation where the mobile termination (MT) is idle/inactive according to an embodiment of the disclosure.
FIG. 12 is a diagram illustrating operations performed when a FWD failure occurs in a situation where the MT is idle/inactive according to an embodiment of the disclosure
FIG. 13 is a diagram illustrating the operation of a serving gNB according to an embodiment of the disclosure.
FIG. 14 is a diagram illustrating the operation of the MT according to an embodiment of the disclosure.

### [Mode for Disclosure]

Hereinafter, the operating principle of the present disclosure will be described in detail with reference to the accompanying drawings. In explaining the disclosure below, descriptions of well-known functions and structures incorporated herein may be omitted to avoid obscuring the subject matter of the disclosure. The terms described below are defined in consideration of their functions in the disclosure, and these may vary depending on the intention of the user, the operator, or the custom. Hence, their meanings should be determined based on the overall contents of this specification.

Those terms used in the following description for identifying an access node, indicating a network entity, indicating a message, indicating an interface between network entities, and indicating various identification information are taken as illustration for ease of description. Accordingly, the disclosure is not limited by the terms to be described later, and other terms referring to objects having an equivalent technical meaning may be used.

In the following description, the "base station (BS)", as a main agent that allocates resources to a terminal, may be at least one of Node B, eNode B, gNode B, radio access unit, base station controller, or node on a network. The "terminal" may include a user equipment (UE), a mobile station (MS), a cellular phone, a smartphone, a computer, or a multimedia system capable of performing a communication function. In the disclosure, downlink (DL) refers to a wireless transmission path through which a base station transmits a signal to a terminal, and uplink (UL) refers to a wireless transmission path through which a terminal transmits a signal to a base station. Further, embodiments of the disclosure may be described by using LTE or LTE-A systems as an example, but the embodiments of the disclosure may be applied to other communication systems having similar technical backgrounds or channel configurations. For example, this may include the 5th generation mobile communication technology (5G, new radio, NR) developed after LTE-A, and the term 5G hereinafter may be a concept that includes existing LTE, LTE-A, and other similar services. Further, it should be understood by those skilled in the art that the disclosure is applicable to other communication systems without significant modifications departing from the scope of the disclosure. Meanwhile, it is known to those skilled in the art that blocks of a flowchart (or sequence diagram) and a combination of flowcharts may be executed by computer program instructions.

These computer program instructions may be loaded on a processor of a general purpose computer, special purpose computer or programmable data processing equipment. When the loaded program instructions are executed by the processor, they create a means for carrying out functions described in the flowchart. As the computer program instructions may be stored in a computer readable memory that is usable in a specialized computer or a programmable data processing equipment, it is also possible to create articles of manufacture that carry out functions described in the flowchart. As the computer program instructions may be loaded on a computer or a programmable data processing equipment, when executed as processes, they may carry out steps of functions described in the flowchart.

In addition, a block of a flowchart may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order according to their corresponding functions. In the description, the word "unit", "module" or the like may refer to a software component or hardware component such as an FPGA (field programmable gate array) or ASIC (application specific integrated circuit) capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose large components and units. Components and units may be configured to drive a device or one or more processors in a secure multimedia card. Also, in an embodiment, a unit or the like may include one or more processors.

For convenience of description below, the disclosure uses terms and names defined in the 5GS and NR standards, which are standards defined by the 3GPP (3rd Generation Partnership Project) organization among currently existing communication standards. However, the disclosure is not limited by the above terms and names, and can be equally applied to wireless communication networks conforming to other standards. For example, the disclosure can be applied to 3GPP 5GS/NR (5^{th} generation mobile communication standards).

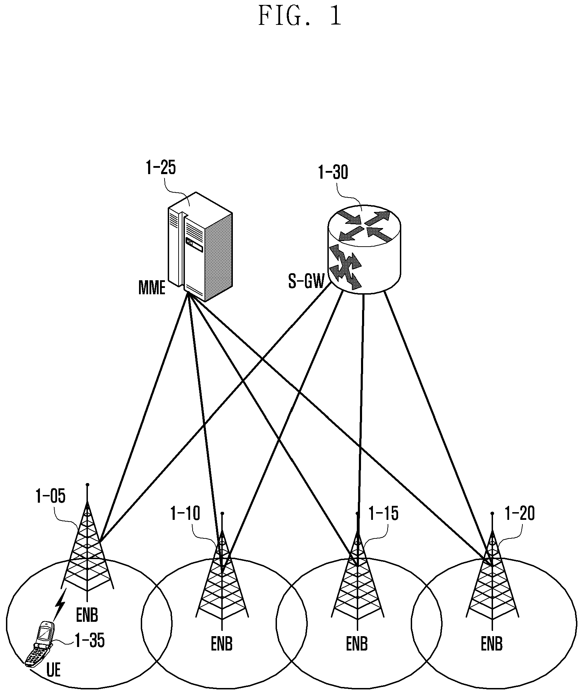

FIG. 1 is a diagram illustrating the architecture of a typical LTE system.

With reference to FIG. 1, as illustrated, the radio access network of the LTE system may be composed of a next-generation base station (evolved node B, ENB, Node B or base station) 1-05, 1-10, 1-15 or 1-20, a mobility management entity (MME) 1-25, and a serving-gateway (S-GW) 1-30. A user equipment (UE or terminal) 1-35 may connect to an external network through the ENB 1-05, 1-10, 1-15 or 1-20 and the S-GW 1-30.

In FIG. 1, the ENBs 1-05 to 1-20 correspond to legacy Node Bs of the universal mobile telecommunication system (UMTS). The ENB is connected to the UE 1-35 through a radio channel, but performs more complex functions in comparison to the legacy Node B. In the LTE system, all user traffic including real-time services like VoIP (Voice over IP) may be served through shared channels. Hence, an apparatus is needed to perform scheduling on the basis of collected status information regarding buffers, available transmit powers and channels of the UEs, and the ENBs 1-05 to 1-20 can be responsible for this. One ENB may control multiple cells in a typical situation. To achieve a data rate of, for example, 100 Mbps in a bandwidth of, for example, 20 MHz, the LTE system may utilize orthogonal frequency division multiplexing (OFDM) as radio access technology. Also, the LTE system may apply adaptive modulation and coding (AMC) to determine the modulation scheme and channel coding rate according to channel states of the UE. The S-GW 1-30 is an entity providing data bearers, and may create and remove data bearers under the control of the MME 1-25. The MME is an entity in charge of various control functions including a mobility management function for the UE, and may be connected to a plurality of ENBs.

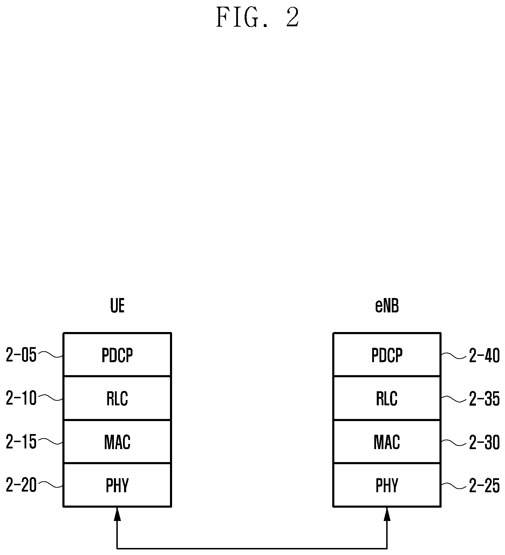

FIG. 2 is a diagram showing the structure of radio protocols in the LTE system.

With reference to FIG. 2, in a UE or an ENB, the radio protocols of the LTE system may be composed of packet data convergence protocol (PDCP) 2-05 or 2-40, radio link control (RLC) 2-10 or 2-35, and medium access control (MAC) 2-15 or 2-30. The PDCP may perform compression and decompression of IP headers. The main functions of the PDCP may be summarized as follows.
- Header compression and decompression function (header compression and decompression: ROHC only)
- User data transfer function (transfer of user data)
- In-sequence delivery function (in-sequence delivery of upper layer PDUs at PDCP re-establishment procedure for RLC AM)
- Reordering function (for split bearers in DC (only support for RLC AM): PDCP PDU routing for transmission and PDCP PDU reordering for reception)
- Duplicate detection function (duplicate detection of lower layer SDUs at PDCP re-establishment procedure for RLC AM)
- Retransmission function (retransmission of PDCP SDUs at handover and, for split bearers in DC, of PDCP PDUs at PDCP data-recovery procedure, for RLC AM)
- Cipher and decipher function (ciphering and deciphering)
- Timer-based SDU discard function (timer-based SDU discard in uplink)

The radio link control (RLC) 2-10 or 2-35 may reconfigure PDCP PDUs (packet data unit) to a suitable size and perform ARQ operation. The main functions of the RLC may be summarized as follows.
- Data transfer function (transfer of upper layer PDUs)
- ARQ function (error correction through ARQ (only for AM data transfer))
- Concatenation, segmentation and reassembly function (concatenation, segmentation and reassembly of RLC SDUs (only for UM and AM data transfer))
- Re-segmentation function (re-segmentation of RLC data PDUs (only for AM data transfer))
- Reordering function (reordering of RLC data PDUs (only for UM and AM data transfer))
- Duplicate detection function (duplicate detection (only for UM and AM data transfer))
- Error detection function (protocol error detection (only for AM data transfer))
- RLC SDU discard function (RLC SDU discard (only for UM and AM data transfer))
- RLC re-establishment function (RLC re-establishment)

The MAC 2-15 or 2-30 may be connected with multiple RLC entities configured in a UE, and it may multiplex RLC PDUs into MAC PDUs and demultiplex MAC PDUs into RLC PDUs. The main functions of the MAC may be summarized as follows.
- Mapping function (mapping between logical channels and transport channels)
- Multiplexing and demultiplexing function (multiplexing/demultiplexing of MAC SDUs belonging to one or different logical channels into/from transport blocks (TB) delivered to/from the physical layer on transport channels)
- Scheduling information reporting function (scheduling information reporting)
- HARQ function (error correction through HARQ)
- Priority handling function between logical channels (priority handling between logical channels of one UE)
- Priority handling function between UEs (priority handling between UEs by means of dynamic scheduling)
- MBMS service identification function (MBMS service identification)
- Transport format selection function (transport format selection)
- Padding function (padding)

The physical (PHY) layer 2-20 or 2-25 may convert higher layer data into OFDM symbols by means of channel coding and modulation and transmits the OFDM symbols through a radio channel, or it may demodulate OFDM symbols received through a radio channel, perform channel decoding, and forward the result to a higher layer.

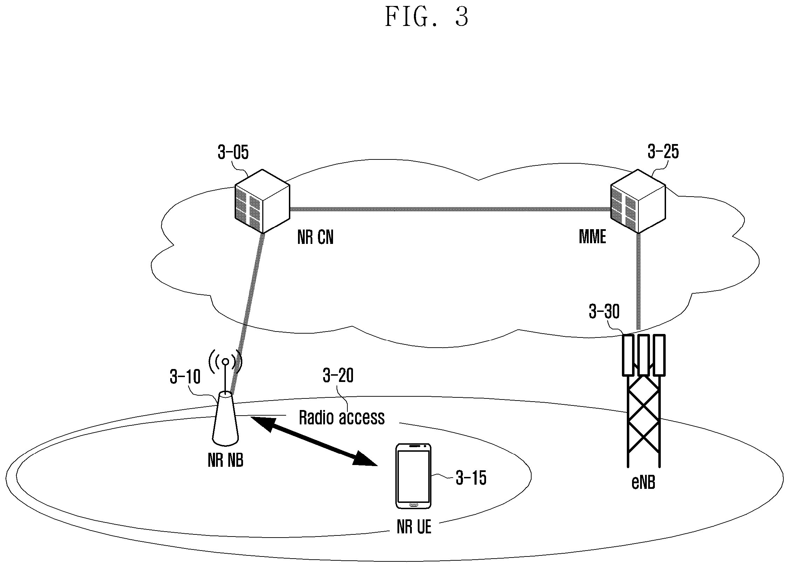

FIG. 3 is a diagram illustrating the architecture of a next-generation mobile communication system.

With reference to FIG. 3, the radio access network of a next-generation mobile communication system (hereinafter, NR or 5G) may be composed of a new radio node B (NR gNB or NR base station) 3-10 and a new radio core network (NR CN) 3-05. A new radio user equipment (NR UE or terminal) 3-15 may connect to an external network through the NR gNB 3-10 and the NR CN 3-05.

In FIG. 3, the NR gNB 3-10 may correspond to an evolved node B (eNB) of the legacy LTE system. The NR gNB may be connected to the NR UE 3-15 through a radio channel, and it can provide a more superior service than that of the legacy node B. All user traffic may be serviced through shared channels in the next-generation mobile communication system. Hence, there is a need for an entity that performs scheduling by collecting status information, such as buffer states, available transmission power states, and channel states of individual UEs, and the NR NB 3-10 may take charge of this scheduling. One NR gNB may control a plurality of cells. To implement ultra-high-speed data transmission compared with normal LTE, a bandwidth beyond the general maximum bandwidth may be utilized in the next-generation mobile communication system. Also, a beamforming technology may be additionally combined with orthogonal frequency division multiplexing (OFDM) serving as a radio access technology. Further, an adaptive modulation and coding (AMC) scheme determining a modulation scheme and channel coding rate to match the channel state of the UE may be applied. The NR CN 3-05 may perform functions such as mobility support, bearer configuration, and quality of service (QoS) configuration. The NR CN is an entity taking charge of not only mobility management but also various control functions for the UE, and may be connected to a plurality of base stations. In addition, the next-generation mobile communication system may interwork with the LTE system, and the NR CN may be connected to the MME 3-25 through a network interface. The MME may be connected to an eNB 3-30 being an LTE base station.

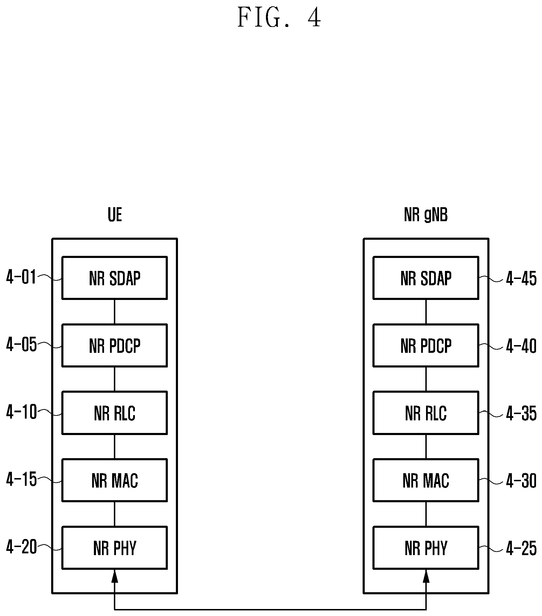

FIG. 4 is a diagram illustrating the structure of radio protocols in the next-generation mobile communication system to which the disclosure may be applied. With reference to FIG. 4, in a UE or an NR gNB, the radio protocols of the next-generation mobile communication system are composed of NR service data adaptation protocol (SDAP) 4-01 or 4-45, NR PDCP 4-05 or 4-40, NR RLC 4-10 or 4-35, NR MAC 4-15 or 4-30, and NR PHY 4-20 or 4-25.

The main functions of the NR SDAP 4-01 or 4-45 may include some of the following functions.
- User data transfer function (transfer of user plane data)
- Mapping function between QoS flows and data bearers for uplink and downlink (mapping between a QoS flow and a DRB for both DL and UL)
- QoS flow ID marking function for uplink and downlink (marking QoS flow ID in both DL packets and UL packets)
- Function of mapping reflective QoS flow to data bearer for uplink SDAP PDUs (reflective QoS flow to DRB mapping for the UL SDAP PDUs)

With respect to the SDAP entity, the UE may be configured with, through a radio resource control (RRC) message, whether to use a header of the SDAP entity or whether to use a function of the SDAP entity for each PDCP entity, bearer, or logical channel. If a SDAP header is configured, the UE may use a NAS (non-access stratum) reflective QoS 1-bit indication and AS (access stratum) reflective QoS 1-bit indication of the SDAP header to instruct the UE to update or reconfigure the mapping information between QoS flows and data bearers for the uplink and downlink. The SDAP header may include QoS flow ID information indicating the QoS. The QoS information may be used as data processing priority and scheduling information for supporting smooth services.

The main function of the NR PDCP 4-05 or 4-40 may include some of the following functions.
- Header compression and decompression function (header compression and decompression: ROHC only)
- User data transfer function (transfer of user data)
- In-sequence delivery function (in-sequence delivery of upper layer PDUs)
- Out-of-sequence delivery function (out-of-sequence delivery of upper layer PDUs)
- Reordering function (PDCP PDU reordering for reception)
- Duplicate detection function (duplicate detection of lower layer SDUs)
- Retransmission function (retransmission of PDCP SDUs)
- Cipher and decipher function (ciphering and deciphering)
- Timer-based SDU discard function (timer-based SDU discard in uplink)

In the above description, the reordering function of the NR PDCP entity may mean reordering of PDCP PDUs received from a lower layer in order based on the PDCP sequence number (SN). The reordering function of the NR PDCP entity may include delivering data to an upper layer in reordered sequence, directly delivering data without considering the order, recording lost PDCP PDUs through reordering, reporting the status of lost PDCP PDUs to the transmitting side, or requesting retransmission of the lost PDCP PDUs.

The main function of the NR RLC 4-10 or 4-35 may include some of the following functions.
- Data transfer function (transfer of upper layer PDUs)
- In-sequence delivery function (in-sequence delivery of upper layer PDUs)
- Out-of-sequence delivery function (out-of-sequence delivery of upper layer PDUs)
- ARQ function (error correction through ARQ)
- Concatenation, segmentation and reassembly function (concatenation, segmentation and reassembly of RLC SDUs)
- Re-segmentation function (re-segmentation of RLC data PDUs)
- Reordering function (reordering of RLC data PDUs)
- Duplicate detection function (duplicate detection)
- Error detection function (protocol error detection)
- RLC SDU discard function (RLC SDU discard)
- RLC re-establishment function (RLC re-establishment)

In the above description, in-sequence delivery of the NR RLC entity may mean in-sequence delivery of RLC SDUs received from a lower layer to an upper layer. In-sequence delivery of the NR RLC entity may include reassembly and delivery of RLC SDUs when several RLC SDUs belonging to one original RLC SDU are received after segmentation.

In-sequence delivery of the NR RLC entity may include reordering of received RLC PDUs based on the RLC sequence number (SN) or the PDCP SN, recording lost RLC PDUs through reordering, reporting the status of the lost RLC PDUs to the transmitting side, and requesting retransmission of the lost RLC PDUs.

If there is a lost RLC SDU, in-sequence delivery of the NR RLC entity may include in-sequence delivery of only RLC SDUs before the lost RLC SDU to an upper layer. Although there is a lost RLC SDU, if a specified timer has expired, in-sequence delivery of the NR RLC entity may include in-sequence delivery of all the RLC SDUs received before the starting of the timer to an upper layer.

Although there is a lost RLC SDU, if a specified timer has expired, in-sequence delivery of the NR RLC entity may include in-sequence delivery of all the RLC SDUs received up to now to an upper layer.

The NR RLC entity may process RLC PDUs in the order of reception regardless of the order of the sequence number, and transfer them to the NR PDCP entity in an out-of-sequence delivery manner.

In case of receiving a segment, the NR RLC entity may reconstruct one whole RLC PDU from segments stored in the buffer or received later, and transfer it to the NR PDCP entity.

The NR RLC layer may not include a concatenation function, which may be performed by the NR MAC layer or may be replaced with a multiplexing function of the NR MAC layer.

In the above description, out-of-sequence delivery of the NR RLC entity may mean a function of transferring RLC SDUs received from a lower layer directly to a higher layer regardless of their order. If several RLC SDUs belonging to one original RLC SDU are received after segmentation, out-of-sequence delivery of the NR RLC entity may include reassembly and delivery of the RLC SDUs. Out-of-sequence delivery of the NR RLC entity may include storing the RLC SNs or PDCP SNs of received RLC PDUs and ordering them to record lost RLC PDUs.

The NR MAC 4-15 or 4-30 may be connected to several NR RLC entities configured in one UE, and the main function of the NR MAC may include some of the following functions.
- Mapping function (mapping between logical channels and transport channels)
- Multiplexing and demultiplexing function (multiplexing/demultiplexing of MAC SDUs)
- Scheduling information reporting function (scheduling information reporting)
- HARQ function (error correction through HARQ)
- Priority handling function between logical channels (priority handling between logical channels of one UE)
- Priority handling function between UEs (priority handling between UEs by means of dynamic scheduling)
- MBMS service identification function (MBMS service identification)
- Transport format selection function (transport format selection)
- Padding function (padding)

The NR PHY 4-20 or 4-25 may compose OFDM symbols from higher layer data through channel coding and modulation and transmit them through a radio channel, or may demodulate and channel-decode OFDM symbols received through a radio channel and forward the result to a higher layer.

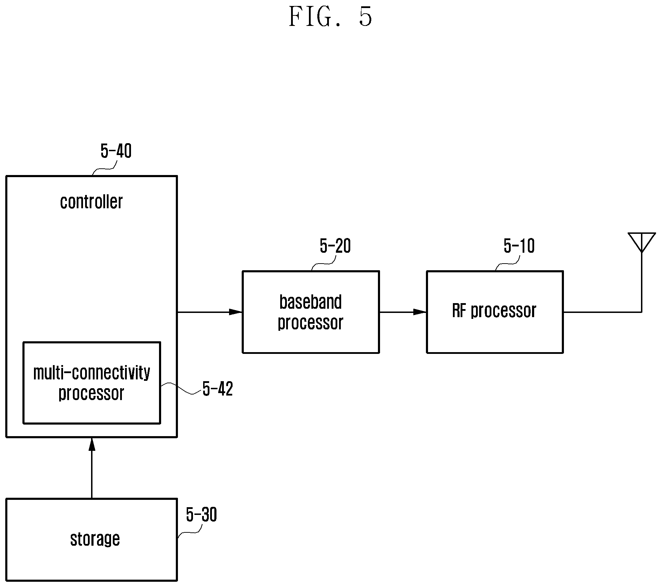

FIG. 5 is a block diagram illustrating the structure of a UE according to an embodiment of the disclosure.

With reference to the drawing, the UE may include a radio frequency (RF) processor 5-10, a baseband processor 5-20, a storage 5-30, and a controller 5-40.

The RF processor 5-10 performs a function for transmitting and receiving a signal through a radio channel, such as signal band conversion and amplification. The RF processor 5-10 performs up-conversion of a baseband signal provided from the baseband processor 5-20 into an RF-band signal and transmits it through an antenna, and performs down-conversion of an RF-band signal received through an antenna into a baseband signal. For example, the RF processor 5-10 may include a transmission filter, a reception filter, an amplifier, a mixer, an oscillator, a digital-to-analog converter (DAC), and an analog-to-digital converter (ADC). Although only one antenna is illustrated in the drawing, the UE may be provided with a plurality of antennas. Also, the RF processor 5-10 may include a plurality of RF chains. Further, the RF processor 5-10 may perform beamforming. For beamforming, the RF processor 5-10 may adjust phases and magnitudes of individual signals transmitted and received through the plural antennas or antenna elements. Further, the RF processor may perform MIMO, and may receive several layers during an MIMO operation.

The baseband processor 5-20 performs conversion between a baseband signal and a bit stream in accordance with the physical layer specification of the system. For example, during data transmission, the baseband processor 5-20 generates complex symbols by encoding and modulating a transmission bit stream. Further, during data reception, the baseband processor 5-20 restores a reception bit stream by demodulating and decoding a baseband signal provided from the RF processor 5-10. For example, in the case of utilizing orthogonal frequency division multiplexing (OFDM), for data transmission, the baseband processor 5-20 generates complex symbols by encoding and modulating a transmission bit stream, maps the complex symbols to subcarriers, and composes OFDM symbols through inverse fast Fourier transform (IFFT) operation and cyclic prefix (CP) insertion. Further, for data reception, the baseband processor 5-20 divides a baseband signal provided from the RF processor 5-10 in units of OFDM symbols, restores the signals mapped to subcarriers through fast Fourier transform (FFT) operation, and restores the reception bit stream through demodulation and decoding.

The baseband processor 5-20 and the RF processor 5-10 transmit and receive signals as described above. Hence, the baseband processor 5-20 and the RF processor 5-10 may be called a transmitter, a receiver, a transceiver, or a communication unit. Further, to support different radio access technologies, at least one of the baseband processor 5-20 or the RF processor 5-10 may include a plurality of communication modules. In addition, to process signals of different frequency bands, at least one of the baseband processor 5-20 or the RF processor 5-10 may include different communication modules. For example, the different radio access technologies may include a wireless LAN (e.g., IEEE 802.11), a cellular network (e.g., LTE), and the like. In addition, the different frequency bands may include a super high frequency (SHF) band (e.g., 2.NRHz, NRhz) and a millimeter wave (mmWave) band (e.g., 60 GHz).

The storage 5-30 stores data such as basic programs, application programs, and configuration information for the operation of the UE. In particular, the storage 5-30 may store information about a second access node that performs wireless communication using a second radio access technology. The storage 5-30 provides stored data in response to a request from the controller 5-40.

The controller 5-40 controls the overall operation of the UE. For example, the controller 5-40 transmits and receives signals through the baseband processor 5-20 and the RF processor 5-10. Further, the controller 5-40 writes or reads data to or from the storage 5-40. To this end, the controller 5-40 may include at least one processor. For example, the controller 5-40 may include a communication processor (CP) for controlling communication and an application processor (AP) for controlling higher layers such as application programs.

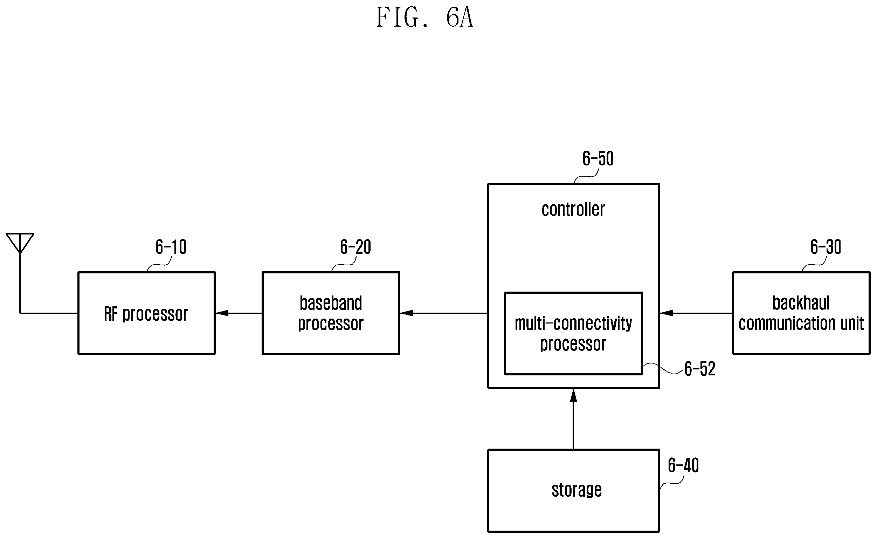

FIG. 6A is a block diagram illustrating the structure of an NR base station according to an embodiment of the disclosure.

As shown in the drawing, the base station includes an RF processor 6-10, a baseband processor 6-20, a backhaul communication unit 6-30, a storage 6-40, and a controller 6-50.

The RF processor 6-10 performs a function for transmitting and receiving a signal through a radio channel, such as signal band conversion and amplification. The RF processor 6-10 performs up-conversion of a baseband signal provided from the baseband processor 6-20 into an RF-band signal and transmits the converted signal through an antenna, and performs down-conversion of an RF-band signal received through an antenna into a baseband signal. For example, the RF processor 6-10 may include a transmission filter, a reception filter, an amplifier, a mixer, an oscillator, a DAC, and an ADC. Although only one antenna is illustrated in the drawing, the first access node may be provided with a plurality of antennas. Additionally, the RF processor 6-10 may include a plurality of RF chains. Further, the RF processor 6-10 may perform beamforming. For beamforming, the RF processor 6-10 may adjust phases and amplitudes of individual signals transmitted and received through plural antennas or antenna elements. The RF processor may perform downlink MIMO operation by transmitting one or more layers.

The baseband processor 6-20 performs conversion between a baseband signal and a bit stream in accordance with the physical layer specification of a first radio access technology. For example, for data transmission, the baseband processor 6-20 generates complex symbols by encoding and modulating a transmission bit stream.

Further, for data reception, the baseband processor 6-20 restores a reception bit stream by demodulating and decoding a baseband signal provided from the RF processor 6-10. For example, in the case of utilizing OFDM, for data transmission, the baseband processor 6-20 generates complex symbols by encoding and modulating a transmission bit stream, maps the complex symbols to subcarriers, and composes OFDM symbols through IFFT operation and CP insertion. Further, for data reception, the baseband processor 6-20 divides a baseband signal provided from the RF processor 6-10 in units of OFDM symbols, restores the signals mapped to subcarriers through FFT operation, and restores the reception bit stream through demodulation and decoding. The baseband processor 6-20 and the RF processor 6-10 transmit and receive signals as described above. Hence, the baseband processor 6-20 and the RF processor 6-10 may be called a transmitter, a receiver, a transceiver, a communication unit, or a wireless communication unit.

The backhaul communication unit 6-30 provides an interface for communication with other nodes in the network. The backhaul communication unit 6-30 converts a bit stream, which is to be transmitted from the primary base station to another node, for example, a secondary base station or the core network, into a physical signal, and converts a physical signal received from another node into a bit stream. The storage 6-40 stores data such as basic programs, application programs, and configuration information for the operation of the primary base station. In particular, the storage 6-40 may store information on a bearer allocated to a connected UE and measurement results reported from the connected UE. Further, the storage 6-40 may store information used as a criterion for determining whether to provide or suspend multi-connectivity to the UE. In addition, the storage 6-40 provides stored data in response to a request from the controller 6-50.

The controller 6-50 controls the overall operation of the base station. For example, the controller 6-50 transmits and receives signals through the baseband processor 6-20 and the RF processor 6-10 or through the backhaul communication unit 6-30. Further, the controller 6-50 writes or reads data to or from the storage 6-40. To this end, the controller 6-50 may include at least one processor.

Meanwhile, NCR stands for network controlled repeater, and the NCR may be functionally divided into NCR-MT and NCR-FWD. The NCR-MT (mobile termination) may receive NCR control information from the serving base station and respond to it, and the NCR-FWD (forwarding) may amplify a backhaul signal received from a base station and forward it to a UE or may amplify a signal received from a UE and forward it to a base station.

In this case, the signal and information exchanged between the MT and the base station are transmitted and received through the control link, and when the FWD amplifies a signal received from the backhaul and forwards it to the UE, the signal may be transmitted through the access link. In reverse, a signal received from the UE through the access link may be transmitted to the base station through the backhaul.

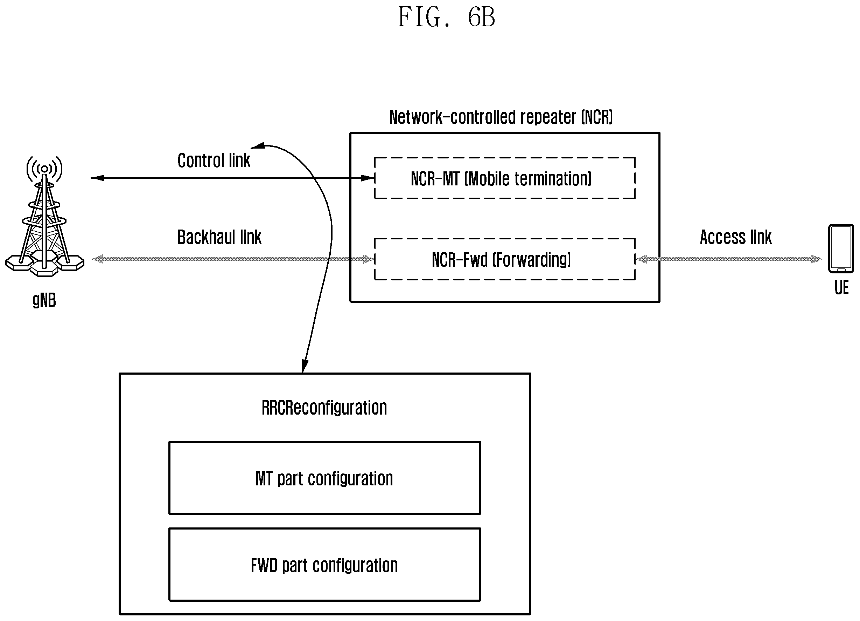

FIG. 6B is a diagram illustrating the functional structure and related links of the NCR.

With reference to FIG. 6B, the control information transmitted to the NCR-MT may be divided into information for the operation of the NCR-MT and information for the operation of the NCR-FWD. The information for the NCR-MT may be information carried by legacy RRC messages transmitted and received between the base station and the UE. The information for the NCR-FWD may be referred to as NCR side control information. The RRC message delivered to the NCR-MT may include NCR side control information. That is, an RRC message including not only information for the NCR-MT but also side control information for the NCR-FWD may be transmitted.

The side control information may include at least one of the following.
- Information about adaptive beam usage. This information may indicate beams on the backhaul link used for DL and/or UL. The beams indicated by this information may be a subset of DL/UL beams on the C-link. The beam index of the RRC configuration transmitted for the C-link may be used to indicate a beam on the backhaul link. Beam indication may be achieved via a beam index or TCI state ID/index.
- Information about semi-static beam usage. This information may indicate beams on the backhaul link used for DL and/or UL. This may be a subset of DL/UL beams on the C-link. The beam index of the RRC configuration transmitted for the C-link may be used to indicate a beam on the backhaul link. Beam indication may be achieved via a beam index or TCI state ID/index.
- Information about the usage of periodic beam indication for access link. Through this information, a pair of a beam index and time resource information to be transmitted through the corresponding beam may be associated with one periodic beam indication.
   **▪** Time resource information may include information about at least one of periodicity, start slot of one period, start symbol within a slot, or number of symbols indicating the duration.
   **▪** Subcarrier spacing information may be indicated in conjunction with one time resource information.
- Information on the usage of aperiodic beam indication for access link. This information may indicate a beam index and time resource information used in the corresponding beam through the DCI.
   **▪** Time resource information may refer to a specific subset of time resources given through RRC signaling in periodic beam indication for the access link.

Next, in the following description, the RRC message mentioned above is assumed to be RRCReconfiguration. However, the RRC message is not limited to the RRCReconfiguration message and may be another DL RRC message or a new DL RRC message.

During the RRCReconfiguration procedure for a UE, when the UE receives an RRCReconfiguration message, the UE may perform a compliance check on the configuration information, and if the compliance check fails, it may perform an RRCReconfiguration failure handling procedure. Here, the compliance check may indicate a procedure for verifying whether the UE can comply with all the configuration information included in the RRC message transmitted by the base station.

As an RRCReconfiguration failure handling procedure, the UE can perform an RRC reestablishment procedure, or a MCGFailureInformation or SCGFailureInformation or FailureInformaiton procedure. In this case, if the UE is not in a dual connected state, the RRC reestablishment procedure may be performed. Meanwhile, the NCR-MT may receive an RRCReconfiguration message including both configuration information for the NCR-MT and configuration information for the NCR-FWD (side control information) from the serving base station. If the legacy UE operation is applied as is, the MT may perform a compliance check on all the configuration information included in the RRCReconfiguration message, and if it fails even in part, the MT may perform the RRCReconfiguration failure handling procedure.

Specifically, if the part that has failed the compliance check is the configuration information for the MT, the MT may perform the RRCReconfiguration failure handling procedure. Since the MT cannot accept the control information of the network, there is no problem in the MT performing the RRCReconfiguration failure handling procedure. However, if the part that has failed the compliance check is not the configuration information for the MT but the configuration information for the FWD, there is a problem with the MT performing the RRCReconfiguration failure handling procedure. That is, since the side control information included together with the MT configuration information in the RRCReconfiguration is the configuration information for the NCR-FWD, its compliance check failure is only a problem of the FWD, not the MT. The MT may still carry out the configuration for the MT received from the serving base station. However, in the above operation, the MT has to perform the RRCReconfiguration failure handling procedure due to a failure of compliance check on the configuration information for the FWD, and if the procedure is RRC reestablishment, the MT may perform an RRC reestablishment operation due to a problem with the FWD, in which case the MT may experience unnecessary disconnection from the network. As the MT and the FWD are assumed to operate independently, it is necessary to ensure that the MT is not affected even by the occurrence of an FWD configuration failure. Additionally, in such a case, information about the configuration failure for the FWD should be transferred to the gNB, so that the network may recognize the occurrence of the configuration failure for the FWD and quickly perform additional operations. Hence, the NCR-MT may perform at least one of the following operations with respect to the RRCReconfiguration failure procedure upon receiving RRCReconfiguration.
- Compliance check may be performed only on the MT configuration information (MT part or MT configuration), and compliance check is not performed on the FWD configuration (FWD part or FWD configuration). That is, the compliance check procedure for the FWD part may be ignored. Or,
- The compliance check result (success or failure) of the FWD configuration may be applied to the compliance check result (success or failure) of the MT configuration information, and for example, logical AND operation may be applied (i.e., success AND success = success, success AND failure = failure, failure AND success = failure, failure AND failure = failure). Alternatively, the compliance check result of the FWD configuration may be added to or not overwritten by the compliance check result of the MT configuration (i.e., the MT performs a compliance check on the MT configuration information and the FWD performs a compliance check on the FWD configuration information, and the results of the operations of the MT and the FWD may not interfere with each other). Or,
- If the compliance check on the MT configuration is successful, the RRCReconfigurationComplete message is transmitted to the gNB. Or,
- If the compliance check on the MT configuration is successful, and if the result of the compliance check performed by the MT on the FWD configuration or the check result received from the FWD is a failure, the MT may include an FWD compliance failure indication in the RRCReconfigurationComplete message to be transmitted to the gNB.
   ▪ Additionally, in this case, the MT may transmit the RRCReconfigurationComplete message including an FWD compliance failure indication and/or an indication of the configuration that has failed the compliance check. For example, it may indicate the cause of configuration failure for the FWD related configuration (side control information) included in RRCReconfiguration, such as backhaul beam configuration failure, DL or UL backhaul beam configuration failure, periodic access link beam configuration failure, or aperiodic access link beam configuration failure.
      ◆ To this end, there may be a bit stream that indicates the type of settings in the side control information, and the order of individual bits of the bit stream may be linked with sub-categories of the side control information, so that information of a sub-category that has failed the compliance check may be indicated as a failure by setting a specific bit position in the bit stream to 1 or 0. In this case, bit 0 or 1 of the remaining bit stream may indicate a success.
   **▪** As a message that includes an FWD failure indication or indication information corresponding to the specific part, a new UL RRC message may be used instead of the RRCReconfigurationComplete message. For example, a message named NCRFailureInformation may be considered. However, the messages are not limited to the above name, and various messages with names indicating FWD failure indications or indication information corresponding to specific parts may be considered.
      ◆ This message may include an indication indicating the type of configuration information that has failed the compliance check among the specific NCR-FWD configuration information, or may include the bit stream information mentioned above.

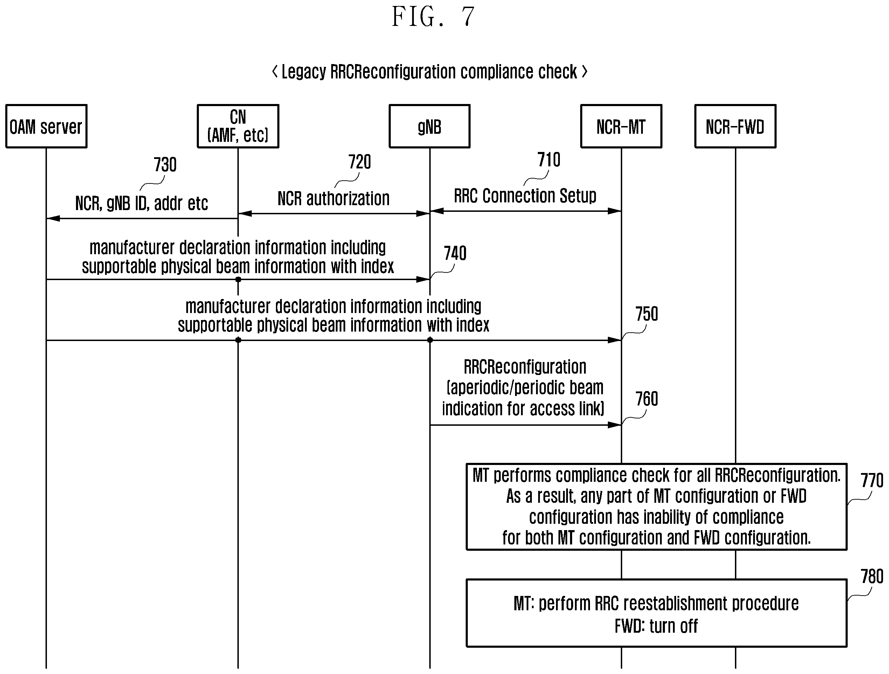

FIG. 7 is a diagram illustrating operations performed based on a legacy compliance check on the RRCReconfiguration message.

According to FIG. 7, even if only the FWD related configuration fails, all operations of the NCR may be stopped.

The gNB establishes an RRC connection with the MT (710). After the MT establishes an RRC connection with the gNB, the AMF may identify that it is an NCR by referencing the UE ID of the MT or the like (720), and transmit the corresponding information along with NCR-MT ID to the OAM server (730). Then, the OAM server may transmit beam information including beam indexes along with manufacturer declaration information to the gNB and the NCR (740, 750). Here, the manufacturer declaration information is the actual operational information related to the beams operated in the FWD, and is vendor specific information. As the information on the available beams is also transmitted to the gNB, the gNB may determine which beam to use among the corresponding beams and how to use it. Based on the above determination, the gNB may transmit side control information including information about beams to be operated to the NCR MT.

The MT may receive an RRCReconfiguration message including the above side control information (760), and may perform a compliance check (770). Here, if the compliance check on the RRCReconfiguration configuration, which includes MT configuration information and FWD configuration information, fails, the MT may perform the RRCReestablishment operation and the FWD may be turned off (780). In particular, the failure of compliance check on the FWD configuration may not only turn off the FWD but also unnecessarily delay data transmission by causing the MT, which may operate normally, to perform the RRCReestablishment procedure. Hence, the RRCReconfiguration failure procedure as described above may be considered, and for example, the MT may ignore the field containing the NCR-FWD configuration during compliance check and perform compliance check on the remaining fields. The MT may transmit an RRCReconfigurationComplete message if the compliance check succeeds, and may perform the RRC reestablishment operation if the compliance check fails.

Specifically, the MT may operate as follows.

| | | | | |
|---|---|---|---|---|
| | | | 5.3.5.8 Reconfiguration failure | |
| 5.3.5.8.1 | | | | Void |
| 5.3.5.8.2 | | | | Inability to comply with *RRCReconfiguration* |
| | NOTE 00: The UE /NCR-MT behaviour specified in this clause does not apply to the following, and the UE/NCR-MT ignores, i.e. does not take an action on and does not store, the fields that it does not support or does not comprehend: | | | |
| | | | | - The fields in *ServingCellconfigCommon* that are defined in release-16 and later. |
| | | | | - The fields of *searchSpaceMCCH* and *searchSpaceMTCH* in *PDCCH-ConfigCommon* that are defined in release-17 and later. |
| | | | | - The fields in *NCR-FWDConfiguration* |
| The UE shall: | | | | |
| | 1> if the UE is in (NG)EN-DC: | | | |
| | | 2> if the UE is unable to comply with (part of) the configuration included in the *RRCReconfiguration* message received over SRB3; | | |
| | | | 3> if the *RRCReconfiguration* message was received as part of *ConditionalReconfiguration:* | |
| | | | | 4> continue using the configuration used prior to when the inability to comply with the *RRCReconfiguration* message was detected; |
| | | | 3> else: | |
| | | | | 4> continue using the configuration used prior to the reception of *RRCReconfiguration* message; |
| | | | 3> if MCG transmission is not suspended | |

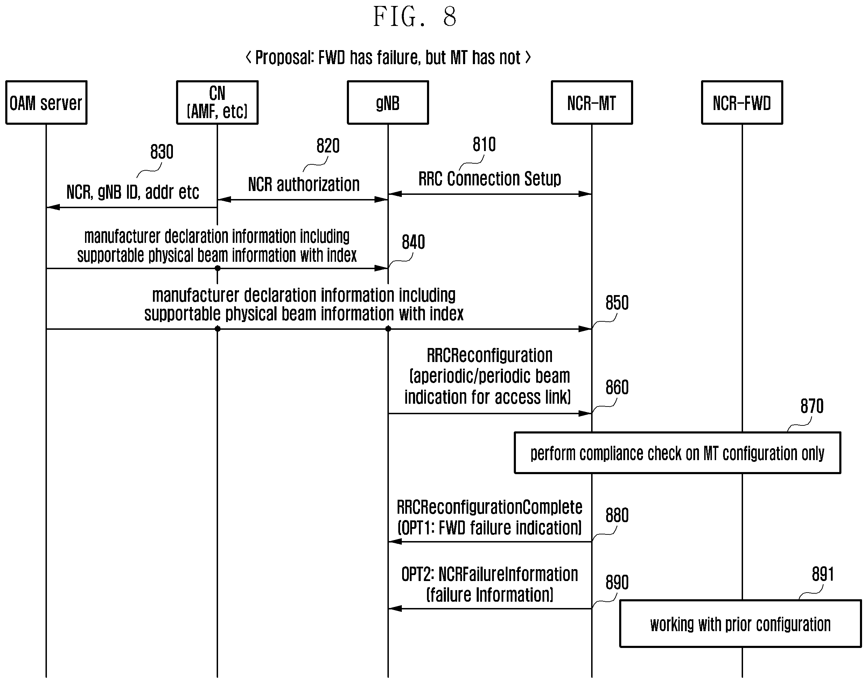

FIG. 8 is a diagram illustrating a method for performing a compliance check on the RRCReconfiguration according to an embodiment of the disclosure.

Procedures 810 to 860 are identical to procedures 710 to 760 and descriptions thereof are omitted below.

This drawing illustrates a case where the compliance check is performed separately on the configuration information for the FWD and on the configuration information for the MT, and indicates a case where the compliance check on the MT configuration is successful and the compliance check on the FWD configuration is fail.

Upon receiving RRCReconfiguration, the NCR-MT may perform at least one of the following operations with respect to the RRCReconfiguration failure procedure.
- Compliance check may be performed only on the MT configuration information (MT part or MT configuration), and compliance check is not performed on the FWD configuration (FWD part or FWD configuration) (870). That is, the compliance check procedure for the FWD part may be ignored. Or,
- The result of the compliance check on the FWD configuration information may be not applied to, added to, or overwritten by the result of the compliance check on the MT configuration information (i.e., the MT performs compliance check on the MT configuration information and the FWD performs compliance check on the FWD configuration information, and the results of MT and FWD operations may not interfere with each other). Or,
- If the compliance check on the MT configuration is successful, the RRCReconfigurationComplete message is transmitted to the gNB. Or,
- If the compliance check on the MT configuration is successful, and if the result of the compliance check performed by the MT on the FWD configuration or the check result received from the FWD is a failure, the MT may include an FWD compliance failure indication in the RRCReconfigurationComplete message to be transmitted to the gNB (OPT1, 880).
   ▪ Additionally, in this case, the MT may transmit the RRCReconfigurationComplete message including a compliance failure indication and/or an indication of the specific part that has failed the compliance check. For example, it may indicate the cause of configuration failure for the FWD related configuration (side control information) included in RRCReconfiguration, such as backhaul beam configuration failure, DL or UL backhaul beam configuration failure, periodic access link beam configuration failure, or aperiodic access link beam configuration failure.
   **▪** As a message that includes an FWD failure indication or indication information corresponding to the specific part, a new UL RRC message may be used (OPT2, 890) instead of the RRCReconfigurationComplete message. For example, a message named NCRFailureInformation may be considered. However, the messages are not limited to the above name, and various messages with names indicating FWD failure indications or indication information corresponding to specific parts may be considered.

RRCReconfigurationComplete (OPT1) and UL RRC message (OPT2) may coexist.

For example, if RRCReconfigurationComplete (OPT1) is used in response to reception of RRCReconfiguration, a UL RRC message (OPT2) may be used if an error or failure occurs in the FWD independently of reception of the RRCReconfiguration message. In this case, as failure information included in the message, in addition to the side control information for the FWD included in RRCReconfiguration, separate information about an error/failure or malfunction that occurs during operation in the FWD may be included.

The above failure information may include at least one of the following information.

**[Table 1]**

| | | | | |
|---|---|---|---|---|
| | | | | FWD specific side control information mentioned above |
| | | | | RF amplifying failure/error/malfunction: |
| | | | | Forwarding failure/error/malfunction: |
| | | | | RF amplifying or forwarding malfunction on specific part of the operating frequency range; |
| | | | | Minimum required SINR on the backhaul link for NCR-Fwd part to function normally; |
| | | | | Power problem: |
| | | | | FWD unit cannot be turned on, or off, and on time. |
| | | | | Each on/off problem can be separated into separate indications. |
| | | | | Not compliant with the given on/off pattern in RRC signaling |
| | | | | Beam indication mismatch: if gNB configure the beam index to be used at FWD but there is no that beam index matched. |
| | | | | Failure of certain beams i.e. inability to perform beamforming in certain directions / changes in radiation [beam] pattern; |
| | | | | OAM malfunction/error/failure |
| | | | - If NCR-Fwd detects that it is forwarding something that it should not be forwarding, such as from another gNB other than Donor gNB | |

In this embodiment, if the compliance check result of the MT is a success and the compliance check result of the FWD is a failure, the MT may notify this result to the gNB through RRCReconfigurationComplete or later additionally indicate the specific failed item to the gNB through an NCRFailureInformation message. At the same time, the FWD may perform its operation by applying the previous configuration before receiving RRCReconfiguration (891).

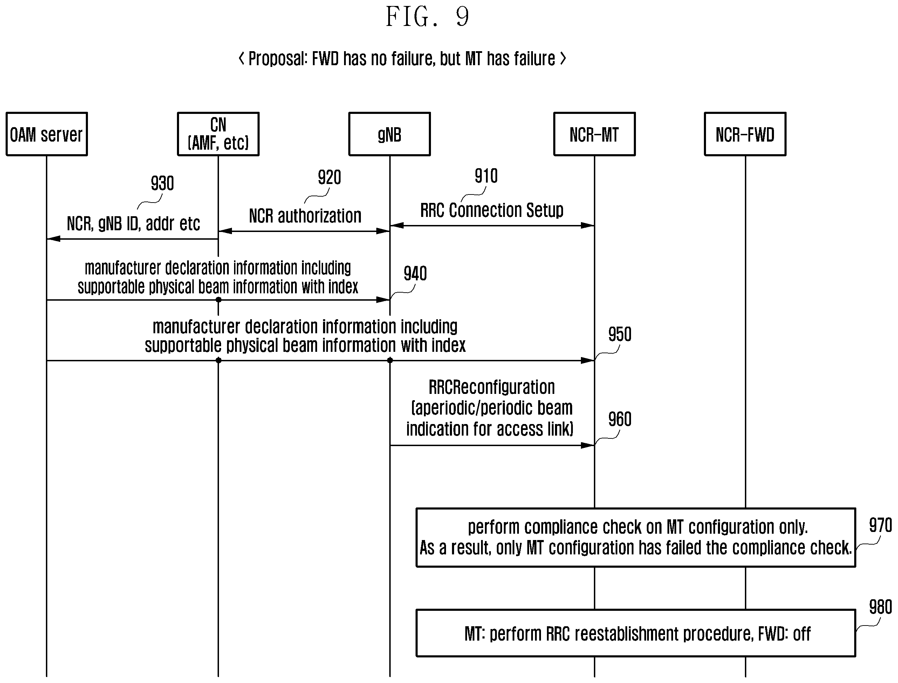

FIG. 9 is a diagram illustrating a method for performing a compliance check on the RRCReconfiguration according to an embodiment of the disclosure.

This drawing illustrates a case where the compliance check is performed separately on the FWD configuration information and on the MT configuration information, and indicates a case where the compliance check on the MT configuration fails and the compliance check on the FWD configuration succeeds (970).

Therefore, if the compliance check on the MT configuration fails, the FWD may be turned off and the MT may perform the RRC Reestablishment operation (980).

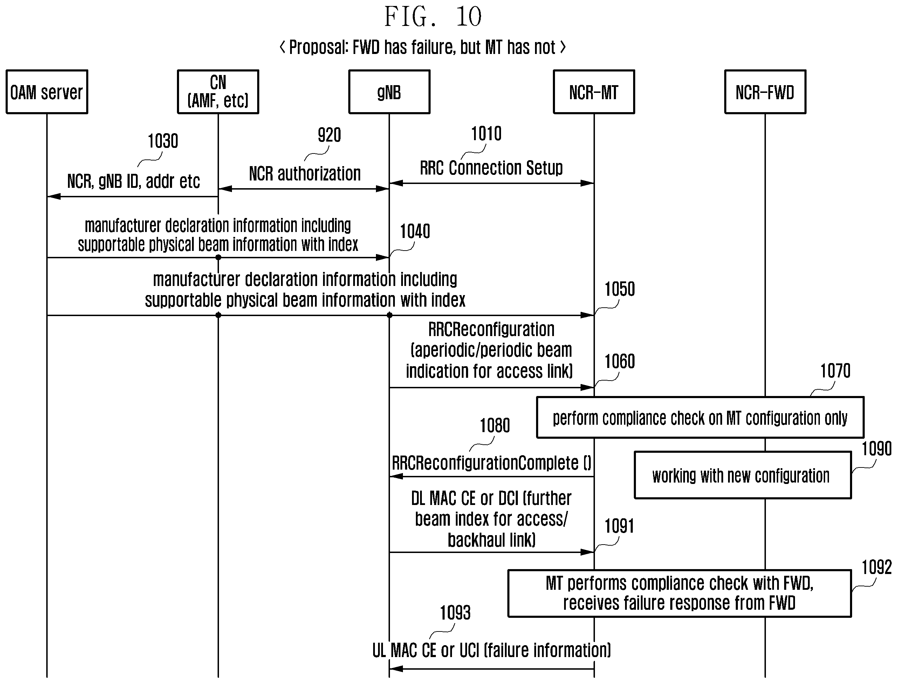

FIG. 10 illustrates a method for notifying a FWD failure via MAC CE or physical layer control signal according to an embodiment of the disclosure.

When the gNB uses a subset of the DL/UL beams of the backhaul previously set through an RRC message as adaptive beams or as (semi) static beams, it may indicate the beam (or subset) to be used via DL MAC CE or DCI (1091). Upon receiving this indication, the MT may perform a compliance check, and if the result is a failure (1092), it may notify the gNB of the failure through UL MAC CE or UCI (1093). For example, if the beam usage for a specific purpose is indicated via DL MAC CE, the MT may notify the gNB of the failure indication as to the corresponding configuration via UL MAC CE/UCI. Or, if the beam usage for a specific purpose is indicated via DCI, the MT may notify the gNB of the failure indication as to the corresponding configuration via UL MAC CE/UCI. In this case, if there is no separate indication (i.e., if UCI or UL MAC CE is not transmitted), the compliance check on the FWD configuration indicated via DL MAC CE or DCI may be considered a success. Meanwhile, UL MAC CE or UCI may include an index indicating configuration information on which compliance check has failed or may be blank. If including an index, the index may indicate configuration information on which compliance check has failed; if being blank, it may mean a failure of the FWD configuration information indicated by the immediately preceding DL MAC CE or DCI.

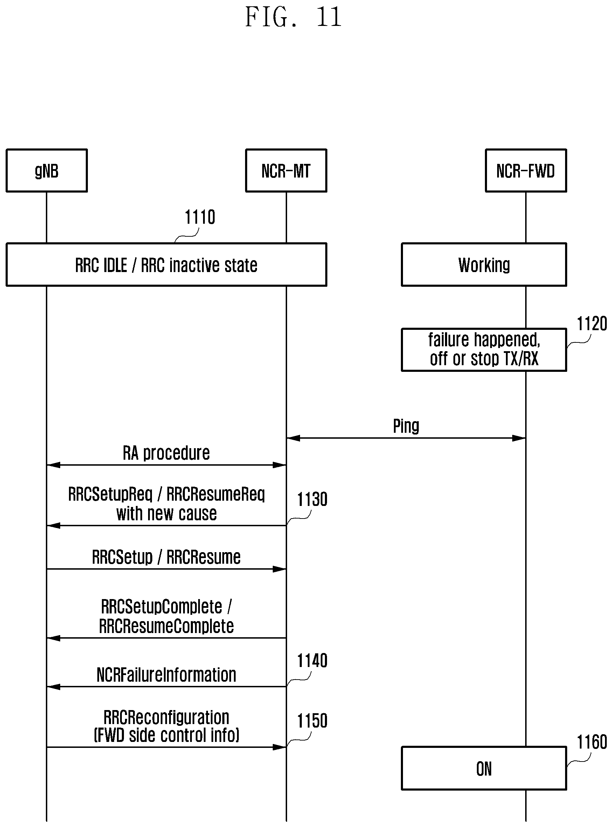

FIG. 11 is a diagram illustrating operations performed when a failure occurs in a situation where the MT is idle/inactive according to an embodiment of the disclosure.

When the MT is in the idle or inactive state (1110), the FWD may still operate in the ON state by applying the configuration information received in the previous connected state. However, if a failure or error occurs during operation (1120), the FWD needs to notify the gNB of the failure or error through the MT. At this time, the MT may transition to the connected state. In the RRCResumeRequest message or RRCSetupRequest message used during the transition, an indication indicating the FWD failure may be used as a new cause value (1130).

In another embodiment, the MT may notify the network of the FWD failure without transitioning to the connected state by using the small data transmission (SDT) scheme. When notifying the network of an FWD failure by using CG-SDT or RA-SDT, an indication indicating the FWD failure may be used as a new cause value in the RRCResumeRequest message or RRCSetupRequest message (1140). In this case, after the MT establishes an RRC connection, it may transmit detailed failure information to the serving gNB through an NCRFailuerInformation message. The gNB may refer to this information to transmit new FWD side control information to the MT via an RRCReconfiguration message (1150), and the FWD having received this information may be turned on to perform regular repeater operations (1160).

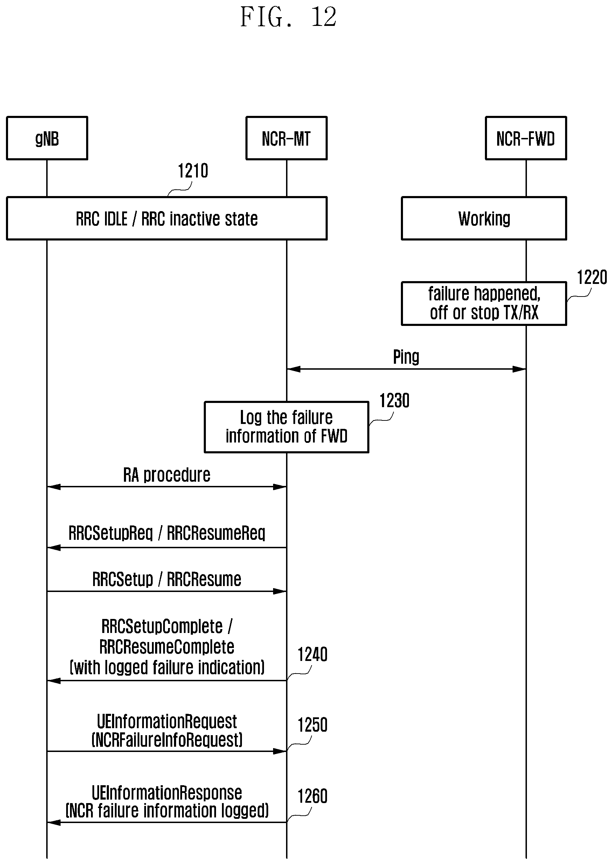

FIG. 12 is a diagram illustrating operations performed when an FWD failure occurs in a situation where the MT is idle/inactive according to an embodiment of the disclosure.

When the MT is in the inactive or idle state (1210), if a failure occurs in the FWD (1220), the MT may log the corresponding failure indication and/or specific information about the failure (1230). Here, the specific information may be the failure information mentioned in FIG. 8 and/or information on a failed part of the FWD configuration information received via RRC.

In addition, when transmitting a complete message during the stage where the UE transitions to the connected state, an indication indicating that FWD failure information is logged (logged failure indication) may be included in the RRCResumeComplete or RRCSetupComplete message to be transmitted (1240). The gNB having received this information may transmit a ULInformationRequest (or, NCRFailureInfoRequest) message including an indication requesting the corresponding logged information to the MT (1250), and the MT having received this message may transmit a ULInformationResponse message including logged information about the failure that has occurred in the FWD (logged NCR failure information) to the gNB (1260).

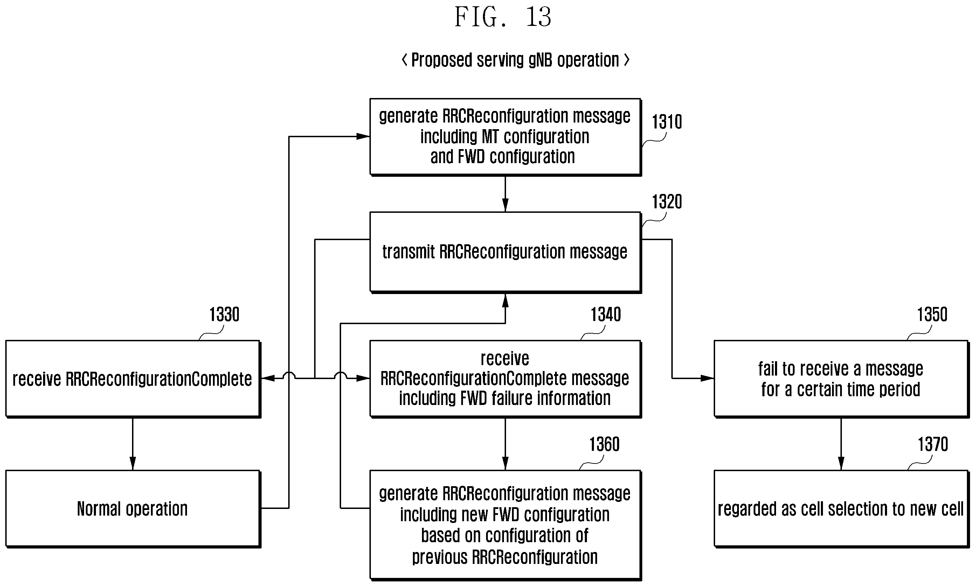

FIG. 13 is a diagram illustrating the operation of the serving gNB according to an embodiment of the disclosure.

With reference to FIG. 13, after the NCR connects to the gNB, the gNB may generate an RRCReconfiguration message as needed. This message may include configuration information for the MT and configuration information for the FWD (1310).

The gNB may transmit the RRCReconfiguration message to the MT (1320). Thereafter, the gNB may receive an RRCReconfigurationComplete message (1330). Or, the gNB may receive an RRCReconfigurationComplete message including an FWD failure indication or FWD failure information. Or, the gNB may not receive a message for a certain period of time.

When an RRCReconfigurationComplete is received, this is a case where the compliance check performed on the MT configuration information and the compliance check performed on the FWD configuration information have both been successful.

When an RRCReconfigurationComplete message including an FWD failure indication or FWD failure information is received, this is a case where the compliance check performed on the MT configuration has succeeded, but the compliance check performed on the FWD configuration has failed. In this case, the gNB may refer to the failed information to transmit an RRCReconfiguration message including new FWD configuration information to the MT (1360). Here, the new FWD configuration information may be a full configuration or a delta configuration. At this time, the delta configuration is a configuration based on the configuration information having been transmitted before the failure of the FWD configuration.

When no message is received for a certain period of time, the gNB takes no further action and may assume that the NCR MT has selected another cell (1370).

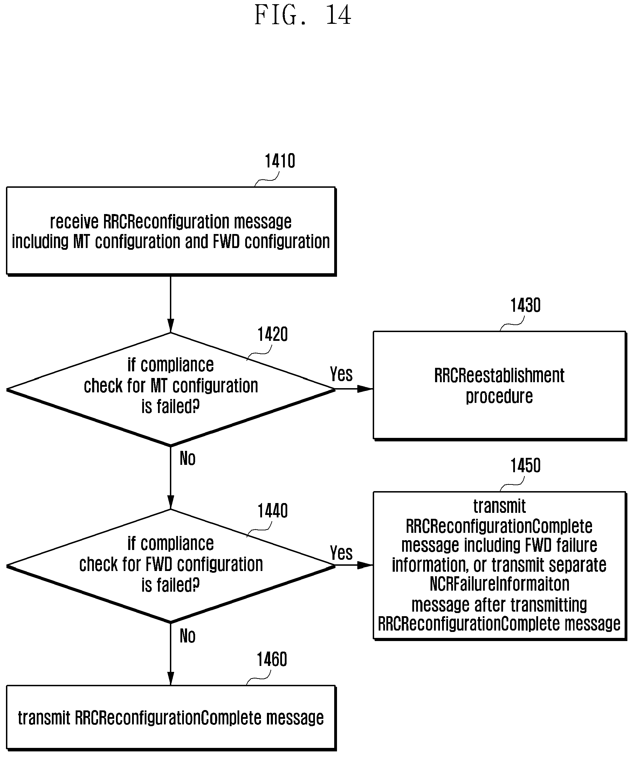

FIG. 14 is a diagram illustrating the operation of the MT according to an embodiment of the disclosure.

With reference to FIG. 14, the MT may receive an RRCReconfiguration message including configuration information for the MT and configuration information for the FWD from the serving gNB (1410).

If the compliance check on the MT configuration fails (1420), the MT may perform the RRCReestablishment procedure (1430) and the FWD may be turned off.

If the compliance check on the MT configuration succeeds and the compliance check on the FWD configuration fails (1440), the MT may transmit an RRCReconfigurationComplete message including an FWD failure indication and/or FWD failure information to the gNB. Here, the FWD failure information may mean information indicating specific configuration information that has failed the compliance check, and may be configured in the form of indexes as described above. Alternatively, the MT may first transmit an RRCReconfigurationComplete message and then transmit an NCRFailureInformaiton message including detailed information about the failure to the gNB. In this case, the FWD may perform the repeater operation as is by using the most recent information among the configuration information that has not failed.

If the compliant check on the MT configuration is successful and the compliance check on the FWD configuration is also successful, the MT may transmit an RRCReconfigurationComplete message to the gNB (1450).

The methods according to the embodiments described in the claims or specification of the disclosure may be implemented in the form of hardware, software, or a combination thereof.

When implemented in software, a computer-readable storage medium storing one or more programs (software modules) may be provided. The one or more programs stored in the computer-readable storage medium may be configured to be executable by one or more processors of an electronic device. The one or more programs may include instructions that cause the electronic device to execute the methods according to the embodiments described in the claims or specification of the disclosure.

Such a program (software module, software) may be stored in a random access memory, a nonvolatile memory such as a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Or, such a program may be stored in a memory composed of a combination of some or all of them. In addition, a plurality of component memories may be included.

Further, such a program may be stored in an attachable storage device that can be accessed through a communication network such as the Internet, an intranet, a local area network (LAN), a wide LAN (WLAN), or a storage area network (SAN), or through a communication network composed of a combination thereof. Such a storage device may access the device that carries out an embodiment of the disclosure through an external port. In addition, a separate storage device on a communication network may access the device that carries out an embodiment of the disclosure.

In specific embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements. Meanwhile, although specific embodiments have been described in the detailed description of the disclosure, it should be noted that various modifications are possible without departing from the scope of the disclosure. Therefore, the scope of the disclosure should not be limited to those embodiments described above, but should be determined by the scope of the appended claims and their equivalents.

## Claims

1. A method performed by a network-controlled repeater mobile termination (NCR-MT) in a communication system, the method comprising:
receiving, from a base station, a radio resource control (RRC) message including a configuration for the NCR-MT and a configuration for an NCR-FWD (forwarding);
performing a compliance check on the configuration for the NCR-MT included in the RRC message with compliance check on the configuration for the NCR-FWD being disregarded; and
transmitting, to the base station, an RRC complete message in case that the compliance check on the configuration for the NCR-MT is successful.

2. The method of claim 1, wherein, in case that the compliance check on the configuration for the NCR-FWD is fail, the RRC complete message includes FWD failure information or an NCR failure information message is transmitted after transmission of the RRC complete message, and
wherein the RRC complete message or NCR failure information message further includes information indicating a configuration that has failed the compliance check among the configuration for the NCR-FWD.

3. The method of claim 1, further comprising performing an RRC reestablishment procedure in case that the compliance check on the configuration for the NCR-MT is fail, wherein the NCR-FWD is turned off.

4. The method of claim 1, further comprising:
receiving, from the base station, a medium access control control element (MAC CE) or downlink control information (DCI) including a beam index for an access link or backhaul link;
performing a compliance check on information included in the MAC CE or DCI; and
transmitting, to the base station, failure information in case that the compliance check on the information included in the MAC CE or DCI is fail.

5. A method performed by a base station in a communication system, the method comprising:
transmitting, to the NCR-MT, a radio resource control (RRC) message including a configuration for a network-controlled repeater mobile termination (NCR-MT) and a configuration for an NCR-FWD (forwarding); and
receiving, from the NCR-MT, an RRC complete message,
wherein the RRC complete message is received in case that a compliance check performed by the NCR-MT on the configuration for the NCR-MT is successful, and a compliance check on the configuration for the NCR-FWD is disregarded.

6. The method of claim 5, wherein in case that the compliance check on the configuration for the NCR-FWD is fail, the RRC complete message includes FWD failure information or an NCR failure information message is received after reception of the RRC complete message, and
wherein the RRC complete message or NCR failure information message further includes information indicating a configuration that has failed the compliance check among the configuration for the NCR-FWD.

7. The method of claim 5, wherein in case that the compliance check on the configuration for the NCR-MT is fail, an RRC reestablishment procedure is performed.

8. The method of claim 5, further comprising:
transmitting a medium access control control element (MAC CE) or downlink control information (DCI) including a beam index for an access link or backhaul link; and
receiving failure information in case that a compliance check performed by the NCR-MT on information included in the MAC CE or DCI is fail.

9. A network-controlled repeater mobile termination (NCR-MT) in a communication system, comprising:
a transceiver; and
a controller coupled with the transceiver and configured to:
receive, from a base station, a radio resource control (RRC) message including a configuration for the NCR-MT and a configuration for an NCR-FWD (forwarding);
perform a compliance check on the configuration for the NCR-MT included in the RRC message with a compliance check on the configuration for the NCR-FWD being disregarded; and
transmit, to the base station, an RRC complete message in case that the compliance check on the configuration for the NCR-MT is successful.

10. The NCR-MT of claim 9, wherein, in case that the compliance check on the configuration for the NCR-FWD is fail, the RRC complete message includes FWD failure information or an NCR failure information message is transmitted after transmission of the RRC complete message, and
wherein the RRC complete message or NCR failure information message further includes information indicating a configuration that has failed the compliance check among the configuration for the NCR-FWD.

11. The NCR-MT of claim 9, wherein the controller is configured to perform an RRC reestablishment procedure in case that the compliance check on the configuration for the NCR-MT is fail, and wherein the NCR-FWD is turned off.

12. The NCR-MT of claim 9, wherein the controller is configured to:
receive, from the base station a medium access control control element (MAC CE) or downlink control information (DCI) including a beam index for an access link or backhaul link;
perform a compliance check on information included in the MAC CE or DCI; and
transmit, to the base station, failure information to the base station in case that the compliance check on the information included in the MAC CE or DCI is fail.

13. A base station in a communication system, comprising:
a transceiver; and
a controller coupled with the transceiver and configured to:
transmit, to the NCR-MT, a radio resource control (RRC) message including a configuration for a network-controlled repeater mobile termination (NCR-MT) and a configuration for an NCR-FWD (forwarding); and
receive, from the NCR-MT, an RRC complete message,
wherein the RRC complete message is received in case that a compliance check performed by the NCR-MT on the configuration for the NCR-MT is successful, and a compliance check on the configuration for the NCR-FWD is disregarded.

14. The base station of claim 13, wherein:
in case that the compliance check on the configuration for the NCR-FWD is fail, the RRC complete message includes FWD failure information or an NCR failure information message is received after reception of the RRC complete message, and
wherein the RRC complete message or NCR failure information message further includes information indicating a configuration that has failed the compliance check among the configuration for the NCR-FWD; and
in case that the compliance check on the configuration for the NCR-MT is fail, an RRC reestablishment procedure is performed.

15. The base station of claim 13, wherein the controller is configured to:
transmit a medium access control control element (MAC CE) or downlink control information (DCI) including a beam index for an access link or backhaul link; and
receive failure information in case that a compliance check performed by the NCR-MT on information included in the MAC CE or DCI is fail.
